# EUROPÄISCHE PATENTANMELDUNG

(11) **EP 1 543 709 A1**
(43) Veröffentlichungstag der Anmeldung: **22.06.2005**
(21) Anmeldenummer: 04022636.7
(22) Anmeldetag: 23.09.2004
(51) Int. Cl.: A01B 45/02

(54) **Bodenbearbeitungsgerät**

(30) Priorität: 19.12.2003 DE 10359994; 14.04.2004 DE 102004018101
(71) Anmelder: Wiedenmann GmbH, 89192 Rammingen (DE)
(72) Erfinder:
(74) Vertreter: Kastel, Stefan Dipl.-Phys.

(57) **Zusammenfassung**

Die Erfindung betrifft ein Bodenbearbeitungsgerät (1) für die Tiefenlockerung von Böden mit einer Reihe von aufeinanderfolgenden Stechwerkzeugen (3) oder Haltern dafür, die mittels einer Kurbelwelle (7) auf und ab bewegt werden. Um eine größere Vielfalt von Arbeitsbreiten zur Verfügung zu stellen ist das Gerät (1) gekennzeichnet durch eine ungeradzahlige Anzahl von sich auf und ab bewegenden Werkzeugen (3) oder Werkzeughaltern.

## Beschreibung

Die Erfindung betrifft ein Bodenbearbeitungsgerät für die Tiefenlockerung von Böden mit einer Reihe von aufeinanderfolgenden Stechwerkzeugen oder Haltern dafür, die mittels einer Kurbelwelle auf und ab bewegt werden.

Solche Bodenbearbeitungsgeräte sind in verschiedenen Arbeitsbreiten und Ausführungen erhältlich. Die am Markt bekannten Aeratoren und Tiefenlüfter haben immer eine geradzahlige Anzahl der Arme. Dies trifft auch für bestehenden Produkte der Anmelderin, z.B. die am Markt unter der Marke Terra-Spike® erhältlichen Produkte der Reihe GTS (6 Arme) und XP Reihe (6,8 und 10 Arme) zu.

Bei den Geräten der hier in Rede stehenden Art werden die Stechwerkzeuge in hohem Tempo auf und ab bewegt. Dabei sind je nach Art der Werkzeuge und wegen der notwendigen Robustheit - die Werkzeuge könnten auf Steine oder dergleichen stoßen und sollen dies unbeschadet überstehen - nicht unerhebliche Massen zu bewegen. Um die Geräte dennoch handhaben zu können, sind die Geräte hinsichtlich ihrer bewegten Massen so weit wie möglich auszubalancieren.

Aus dieser Notwendigkeit ergibt sich auch das bisher durchgängig vorhandene Merkmal der geradzahligen Anzahl von Armen zur Bewegung der Stechwerkzeuge. Bisher sind die Einstechwerkzeuge sämtlich paarweise symmetrisch in etwa zur Mitte der Kurbelwelle angeordnet, wobei die Paare allerdings zueinander in verschiedenen Winkelversätzen angeordnet sein können und sind, siehe beispielhaft auch die US 5,570,746. Von der paarweisen Anordnung wird eine gegenseitige Beruhigung und Vermeidung von seitlichen Kippmomenten für das Gerät begünstigt.

Bekannte Bodenbearbeitungsgeräte haben also bisher immer eine gerade Anzahl von Stechwerkzeugen, um die bei der Bewegung der die Werkzeuge haltenden Arme auftretenden Unwuchten und Kippmomente ausgleichen zu können.

Die Sprünge zwischen den einzelnen erhältlichen Arbeitsbreiten sind jedoch recht hoch und es ist wünschenswert, eine größere Vielfalt zu erhalten.

Dies wird erfindungsgemäß dadurch gelöst, dass eine ungerade Anzahl von Arbeitswerkzeugen, Kurbeln, Tragarmen und/oder Werkzeughaltern vorgesehen ist.

Der Sprung zwischen den bisher erhältlichen Geräten mit der jeweils höheren geraden Anzahl von Kurbeln ist relativ groß. Durch die Erfindung ist nun eine Zwischenstufe geschaffen. Dadurch kann die Arbeitsbreite des Gerätes in "Armabständen" gewählt werden, und das unter Verwendung von Gleichteilen für Kernkomponenten wie Kurbel, Werkzeugträger, Schwingen, etc.

Vorteilhafte Ausgestaltungen der Erfindung sind Gegenstand der Unteransprüche.

Bevorzugte weitere Merkmale von vorteilhaften Ausgestaltungen der Erfindung können sein:
- eine ungerade Anzahl von Kurbeln, wobei die Arme/Werkzeugträger von aussen beginnend jeweils paarweise aufgebaut sind;
- der "überzählige" Arm ist jeweils der mittlere;
- da die mittlere Kurbel die geringste Kippbewegung in das Gerät einbringt, kann diese daher statt "doppelt" auch "einzeln" ausgeführt sein, ohne die Laufruhe zu sehr zu beeinträchtigen.
- bedingt durch die ungerade Anzahl erfolgt der Durchtrieb vorzugsweise unterhalb der Kurbel und nach dem hinteren Teil des Gerätes (siehe hierzu näher die WO03/096784, aus der weitere Einzelheiten ersichtlich sind), aber nicht in mittiger Anordnung, sondern bevorzugt einseitig versetzt zur zentralen "überzähligen" Einzelkurbel;
- mindestens ein einseitiger Antrieb, vorzugsweise ein (symmetrisch) zweiseitiger Antrieb über vorzugsweise kraftschlüssige Getriebe, insbesondere Zugmittelgetriebe wie Keilriemenantriebe oder dergleichen von der Stirnseite der Kurbel her (siehe WO 03/096784);
- wenigstens ein gekapseltes Getriebe außerhalb des Schmutzbereichs, wie in der WO 03/096784 gezeigt.

Durch ein kraftschlüssiges Getriebe, wie insbesondere Keilriemenantrieb, lässt sich ohne großen Aufwand eine Rutschkupplungsfunktion ermöglichen, um Beschädigungen bei Auftreffen auf Hindernissen oder sonstigen Störungen, die unzulässige Erhöhung der sich des sich Kraftübertragung entgegenstellenden Widerstandes bedingen, zu vermeiden. Eine Kapselung des Getriebes hält dieses frei von Verschmutzungen, auch im sogenannten Hoohlspoon-Betrieb. Bei diesem werden hohle Stechwerkzeuge eingesetzt, mit denen sich überzähliger Boden aus Bereichen unter der Grasnabe herausheben lässt, was zu einem naturgemäß starkem Schmutzanfall führt. Mit gekapseltem kraftschlüssigem Antrieb ist die vorerwähnte Rutschkupplungsfunktion ohne Probleme durch Schmutz möglich.

Die Ansprüche sind nur als Formulierungsversuch anzusehen, auch die aus den Unteransprüchen oder den Zeichnungen entnehmbaren Einzelmerkmale können für sich alleine gesehen ohne die Merkmale des Hauptanspruches stehen.

Ein Ausführungsbeispiel der Erfindung wird nachfolgend anhand der beigefügten Zeichnung näher erläutert. Darin zeigt:

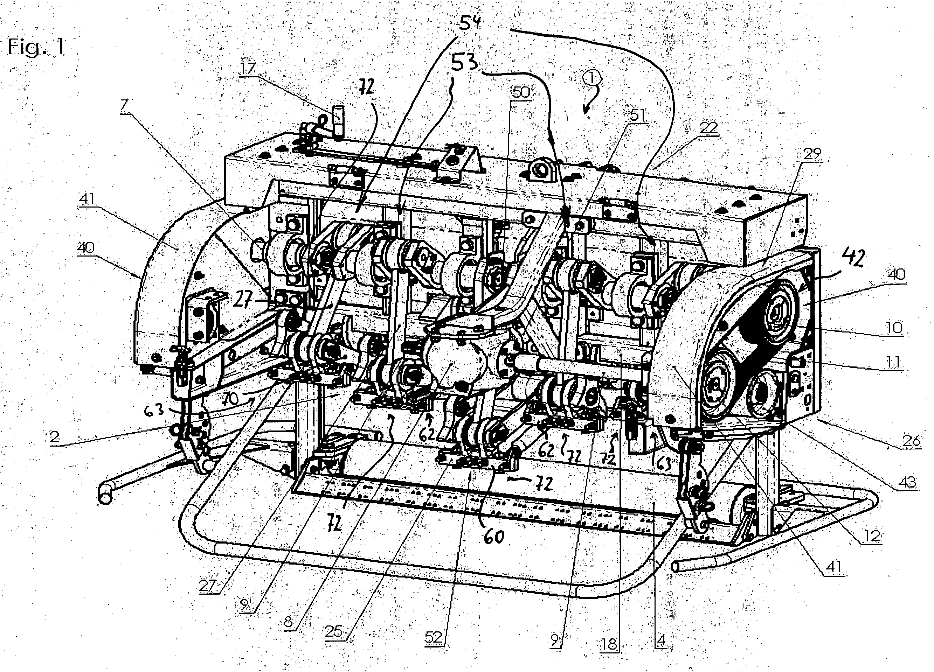

- Fig. 1: eine perspektivische Ansicht, teils von hinten, teils von der Seite, eines Bodenbearbeitungsgerät mit entferntem Gehäusedeckel und einer entfernten Antriebswelle und

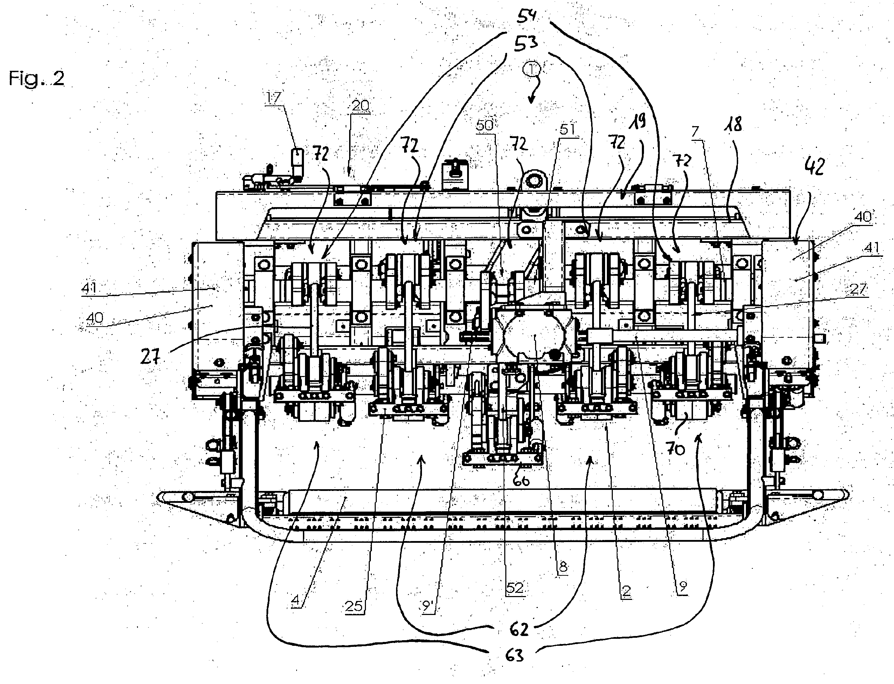

- Fig. 2: eine Rückansicht des Geräts aus Fig. 1.

In den Figuren ist ein Bodenbearbeitungsgerät 1 zur Tiefenlockerung von Böden dargestellt, das bis auf die im folgenden erläuterten Unterschiede dem Gerät aus der WO 03/096784 entspricht. Die Bezugszeichen entsprechen denjenigen der WO 03/096784 und die Beschreibung der entsprechenden Teile wird hier nicht wiederholt, es wird im vollen Umfang auf die WO 03/096784 verwiesen. Weitere Merkmale ergeben sich zumindest durch Hinzufügen der aus den folgenden Druckschriften bekannten Merkmale zu dem hier gezeigten Gerät: der EP 0 452 449 B1, der EP 1 040 741, der DE 200 15 504 U, der DE 200 20 018 U und der EP 1 210 853 A1. Alle diese Druckschriften sind auch Teil der Offenbarung dieser Anmeldung. Die Merkmale sind beliebig untereinander kombinierbar, dabei ist aber auch keines der hier beschriebenen Merkmale unentbehrlich.

Bei dem hier dargestellten Bodenbearbeitungsgerät ist eine ungerade Anzahl von Kurbeln 50, 52, 53, Tragarmen 70, Werkzeughaltern 25, 60, 62, 63 und daran zu befestigenden, nicht extra dargestellten, aber hinreichend bekannten (Stech-)Werkzeugen vorgesehen. Bei dem dargestellten Gerät sind es fünf solcher aus Kurbel 50, 52, 53, Tragarm 70, Pleuelstange 27 und Werkzeughaltern 25, 60, 62, 63 sowie eventuell Werkzeugen gebildeten Werkzeugeinheiten 72, in anderen Ausführungsformen auch drei, sieben oder neun oder mehr.

Dabei ist eine Kurbel 50 der Kurbelwelle 7 im wesentlichen mittig an der Kurbelwelle 7 (auch im wesentlichen mittig zu dem Gerätechassis 19) vorgesehen und die übrige geradzahlige Anzahl von Kurbeln 52, 53 ist links und rechts symmetrisch verteilt angeordnet. Entsprechend ist die Anordnung der übrigen beweglichen, den einzelnen Werkzeugen zugeordneten Teile 72, 70, 27, 25, 60, 62, 63. So ist ein Werkzeughalter 60 mittig zur Kurbelwelle 7 und/oder dem Gerätechassis 19 oder Rahmen 18 angeordnet. Bei dem Beispiel sind zwei Paare 62, 63 von weiteren Werkzeughaltern von ihrer Anordnung quer zur Fahrtrichtung her gesehen jeweils symmetrisch zu dem mittigen Werkzeughalter 60 links und rechts angeordnet. Die Drehwinkelstellung bezüglich der Kurbelwellendrehung kann bei den Werkzeughaltern 62, 63 je eines Paares unterschiedlich sein.

Der Durchtrieb 51 von dem Zapfwellenanschluss 6 (siehe oben genannte WO-Schrift) auf das hier dargestellte Verteilergetriebe 8 erfolgt seitlich an dem mittleren Werkzeugkurbelantrieb 52 vorbei. Von dem Verteilergetriebe 8 aus erfolgt der Antrieb der Kurbelwelle 7 durch die seitlichen, in gesonderten gekapselten Gehäusen 41 untergebrachten Riemenantriebe 26.

### BEZUGSZEICHENLISTE

- 1: Bodenbearbeitungsgerät
- 2: Gruppe oder Aufeinanderfolge von Werkzeugen
- 4: walzenförmige Abstützung
- 7: Kurbelwelle
- 8: Verteilergetriebe
- 9, 9': Abtriebswelle
- 10: Riemenscheiben
- 11: Keilriemen
- 12: Antriebsriemenscheiben
- 17: Höheneinstelleinrichtung
- 18: Rahmen
- 19: Chassis
- 20: zentrale Verstelleinrichtung
- 22: Frontseite
- 25: Halterungen (Werkzeugträger)
- 26: Keilriemenantrieb
- 27: Pleuelstangen
- 28: zentrale Verstellachse
- 29: Antriebseinrichtung
- 40: Antriebsvorrichtung für die Kurbelwelle
- 41: Gehäuse
- 42: Zugmittelgetriebe
- 43: Spannscheibe
- 50: mittlere Kurbel
- 51: Durchtrieb
- 52: Kurbelantrieb des mittleren Werkzeuges
- 53: erstes Paar relativ zur mittleren Kurbel symmetrisch zueinander angeordneter Kurbeln
- 54: zweites Paar relativ zur mittleren Kurbel symmetrisch zueinander angeordneter Kurbeln
- 60: mittlerer Werkzeughalter
- 62: erstes Paar relativ zum mittleren Werkzeughalter symmetrisch zueinander angeordneter Werkzeughalter
- 63: zweites Paar relativ zum mittleren Werkzeughalter symmetrisch zueinander angeordneter Werkzeughalter
- 70: Tragarm
- 72: Werkzeugeinheit

## Patentansprüche

1. Bodenbearbeitungsgerät (1) für die Tiefenlockerung von Böden, **gekennzeichnet durch** eine ungeradzahlige Mehrzahl von sich auf und ab bewegenden Werkzeugeinheiten (72), Werkzeugen oder Werkzeughaltern (25, 60, 62, 63).

2. Gerät nach Anspruch 1,
**dadurch gekennzeichnet,**
**dass** eine zum Werkzeugantrieb vorgesehene Kurbelwelle (7) eine ungeradzahlige Anzahl von Kurbeln (50, 53, 54) aufweist, wobei eine Kurbel (50) im wesentlichen mittig angeordnet ist.

3. Gerät nach einem der voranstehenden Ansprüche,
**dadurch gekennzeichnet,**
**dass** eine Werkzeugeinheit, ein Werkzeug oder ein Werkzeughalter (60) in zur Fahrtrichtung senkrechter horizontaler Richtung gesehen im wesentlichen mittig angeordnet ist.

4. Gerät nach Anspruch 3,
**dadurch gekennzeichnet,**
**dass** die verbleibenden Werkzeuge und/oder die ihnen zugeordneten beweglichen Teile (72, 27, 25, 60, 62, 63, 70) jeweils paarweise symmetrisch angeordnet sind.

5. Bodenbearbeitungsgerät für die Tiefenlockerung von Böden, vorzugsweise nach einem der voranstehenden Ansprüche, mit einer Reihe von sich auf und ab bewegenden (Stech-)Werkzeugen oder Haltern (25, 60, 62, 63) dafür,
**dadurch gekennzeichnet,**
**dass** ein Durchtrieb (51) zur Kraftübertragung von einem das Gerät (1) ziehenden oder tragenden Fahrzeug auf ein Verteilergetriebe (8) oder dergleichen Getriebe zum Antreiben der Kurbelwelle (7) einseitig versetzt an einem mittleren Kurbeltrieb (52) vorbei geführt ist.

6. Gerät (1) nach einem der voranstehenden Ansprüche,
**dadurch gekennzeichnet,**
**dass** wenigstens ein seitlicher Antrieb (26), vorzugsweise außerhalb eines die Werkzeuge behausenden Gerätegehäuses, zum Antreiben einer Kurbelwelle (7) von der Stirnseite her vorgesehen ist und vorzugsweise gekapselt ist.

7. Gerät nach einem der voranstehenden Ansprüche,
**gekennzeichnet durch** wenigstens einen Riemenantrieb (26) für die Kurbelwelle (7).
